Europäisches Patentamt

**European Patent Office**

**Office européen des brevets**

(11) Publication number:

**0 357 855**
**A1**

# EUROPEAN PATENT APPLICATION

(21) Application number: 88308378.4

(22) Date of filing: 09.09.88

(51) Int. Cl.5· **G01S 13/93 , G01S 7/02**

(43) Date of publication of application:
**14.03.90 Bulletin 90/11**

(84) Designated Contracting States:
**AT BE CH DE ES FR GB GR IT LI LU NL SE**

(71) Applicant: **Dombrowski, Anthony E.**
**9903 Broadmoor Drive**
**Omaha Nebraska 68114(US)**

(72) Inventor: **Dombrowski, Anthony E.**
**9903 Broadmoor Drive**
**Omaha Nebraska 68114(US)**

(74) Representative: **Adams, William Gordon et al**
**RAWORTH, MOSS & COOK 36 Sydenham**
**Road**
**Croydon Surrey CR0 2EF(GB)**

(54) **Drive alerting device.**

(57) A driver alerting device (10) includes a micro-
wave (20) transceiver mountable at the rearward end
of a vehicle (14) for directing its wave output rearwardly of the vehicle. Return wave signals for many
objects within the transceiver range are picked up
and supplied to the transceiver by an antenna (22).
Any resultant doppler shift signal is amplified for
driving an audio alarm (26) which may be provided
within the passenger compartment of the vehicle.
The device may be connected to the back-up light
circuit of the vehicle for activation only when the
vehicle transmission is engaged in reverse gear.

FIG. 1

# DRIVER ALERTING DEVICE

The present invention is directed generally to a device for alerting the driver of a rearwardly moving vehicle to the presence of any object in close range behind the vehicle. More particularly, the present invention is directed to a micro-wave radar device using the doppler shift principle to detect the presence of a moving target within the transceiver range.

Drivers of motor vehicles have always had a certain degree of difficulty with backing up their vehicles. Whereas this is due partly to the different steering response of a rearwardly moving vehicle, most backing-up accidents are due to the driver's limited visibility. Many trucks have a considerable blind spot directly rearwardly of the vehicle which is not visible through side mounted mirrors. But even in smaller trucks and passenger cars with rear windows, there may be blind spots at the rearward corners of the vehicle and below the driver's line of sight.

Devices have previously been known for detecting the presence of objects behind a vehicle but such devices have not achieved widespread usage. Devices which provide an audible alarm directed rearwardly of the vehicle are ineffective if a child, for example, in the path of the vehicle does not react to the alarm and if the vehicle driver does not hear the alarm.

The driver alerting device according to an embodiment of the present invention includes a transceiver mountable at the rearward end of a vehicle for directing its wave output rearwardly of the vehicle. Return wave signals from any object within the short transceiver range behind the vehicle are supplied to the transceiver through an antenna connection. Any resultant doppler shift signal is amplified for driving the audio alarm. The circuit of the device is adapted for electrical connection to the back-up light circuit of a vehicle for activation only when the vehicle transmission is engaged in reverse gear.

The driver alerting device thus immediately sounds an alarm when any moving or stationary object is detected within the short transceiver range behind a rearwardly moving vehicle on which it is installed. Even when the vehicle is stationary, but with the back-up lights activated, the device will signal the presence of any moving object within the transceiver range. Because the device operates by micro-wave radar, it is unaffected by noise, light, or weather conditions such as snow, rain, heat and cold.

An embodiment of this invention will now be described in detail with reference to the accompanying drawings in which:-

Figure 1 is a diagrammatic top plan view of a driver alerting device according to the invention installed on a vehicle;

Figure 2 is an electrical schematic circuit diagram of the driver alerting device of Fig. 1; and

Figure 3 is a perspective view of the transceiver housing of the device of Fig. 1.

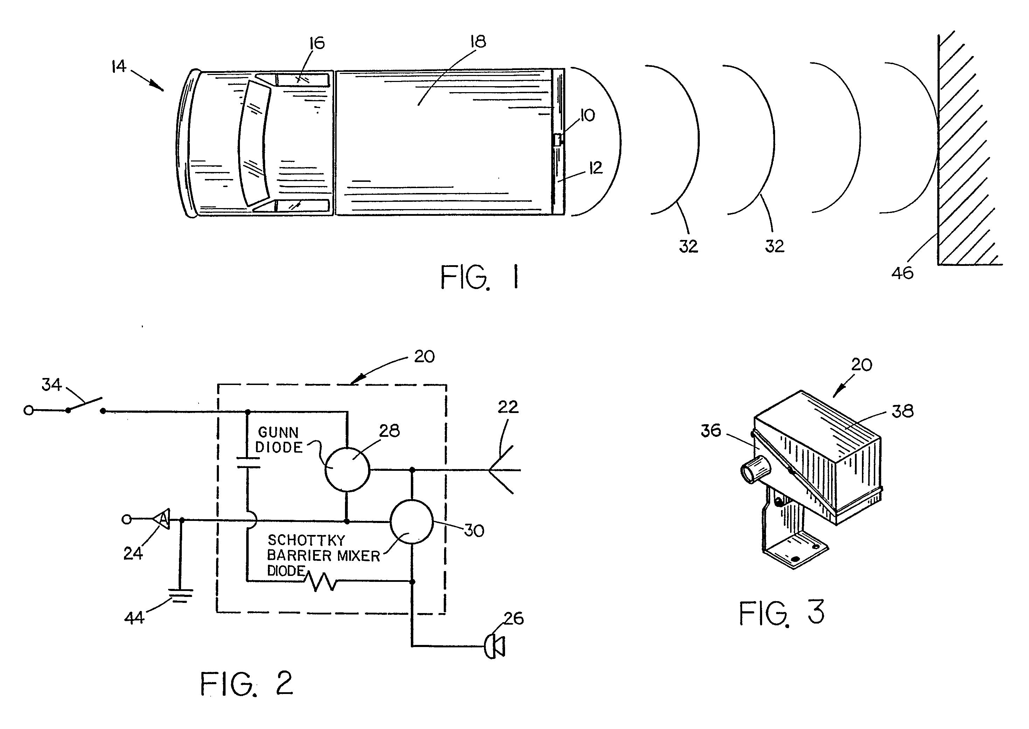

The driver alerting device of the present invention is indicated generally at 10 in Figure 1 installed on the rear bumper 12 of a truck 14 having a passenger compartment 16 situated forwardly of box 18. Device 10 operates by micro-wave radar using the doppler shift principle to detect the presence of a moving target within the transceiver range.

The operating elements of the device 10 are wholly electronic and are shown in Figure 2 as including a transceiver 20, an antenna 22, an intermediate frequency amplifier 24 and an audio alarm 26.

The transceiver 20 includes a gunn diode 28 mounted in a wave guide cavity which acts as the transmitter and local oscillator, together with a schottky barrier mixer diode 30 for the receiver. Electromagnetic radiation transmitted from the gunn diode 28 is reflected back at the antenna by any object within the transceiver range. If that object is moving relative to the vehicle, the frequency shift of the wave reflected by the moving object is measured electronically and triggers activation of the alarm 26.

In the preferred embodiment, output frequency of the transceiver 20 is factory preset at 10.525 G Hz. Power output is 5 milliwatts minimum. Operating voltage is 8 volts D.C. The resultant doppler frequency obtained is 31.39 Hz for each 1.61 Km (mile) per hour of radio velocity. The transceiver is unaffected by the presence of magnetic fields, noise, light and varying weather conditions.

Antenna 22 may be provided as either a high gain antenna or low gain antenna. The high gain antenna is preferred for application with 1/4 tonne, 1/2 tonne and 1 tonne vehicles measuring 200 cm (80 inches) maximum in width. The low gain antenna is preferred on 1 tonne and larger vehicles measuring 200 cm (80 inches) and greater in width. The range of the antennas is adjustable and may be user set to accommodate virtually any vehicle. This adjustment is incorporated in the intermediate frequency amplifier 24 and is accessible from the outside of the unit. Antenna 22 is preferably constructed of machined aluminum and is also preferably flange-mounted directly to the transceiver 20, thus eliminating the effects of noise and spurious response. Lines 32 in Figure 1 illustrate an example of a typically adjusted wave pattern.

The intermediate frequency amplifier 24 is a solid state, multi-stage operational amplifier designed to amplify and shape the resultant doppler shift signal. The circuitry is card mounted and has built-in range and sensitivity controls. The amplifier is designed to interface with the existing reverse switch 34 (Fig. 2) in order to activate the circuit only during reverse operation of the vehicle. Reverse switch 34 is typically associated with the vehicle transmission and is incorporated into the back-up light circuit of the vehicle for illuminating the back-up lights whenever the vehicle transmission is engaged in reverse gear.

The audio alarm 26 is mounted interiorly of the passenger compartment 16 so as to be readily audible to the driver of the vehicle. Amplifier 24 drives both the audio alarm 26 and a light emitting diode mounted on the unit. The purpose of the light emitting diode is to aid in the adjustment of the unit in the event that the alarm is not audible to the one adjusting the unit at the rearward end of the vehicle.

The transceiver 20 is shown in Figure 3 as including a housing 36 which is diagonally sectioned to provide a pivotal top cover 38. The wave output from the transceiver 20 is transmitted outwardly through a rearwardly protruding channel section 40 on the rear wall of housing 36. A mounting flange 42 extends downwardly from the housing for ready attachment to a vehicle bumper or the like.

The circuitry is card mounted and all components are treated with a conformal coating to prevent the effects of moisture and salt. Electrical hook-up to the vehicle is achieved via a splash-proof four circuit connector mounted on the side of the unit. One of the four leads is connected to the vehicle ignition switch, one to the back-up lights or reverse switch 34 on the transmission, one to ground 44 and one to the alarm 26.

The audio alarm is preferably a solid state piezoelectric alarm capable of developing 80 decibels at 12 volts D.C.

In operation, the transceiver 20 is activated to transmit electromagnetic radiation whenever the vehicle ignition is on and the transmission is engaged in reverse gear. This closes the vehicle reverse switch 34 for illuminating the vehicle back-up lights. A reducer may be provided between the transceiver 20 and reverse switch 34 to adjust the operating voltage to 8 volts D.C. The transceiver range spans the width of the vehicle 14 and extends rearwardly approximately 2 to 4 metres (6 to 12 feet). The maximum range would be approximately 6 metres (20 feet).

As the vehicle is driven rearwardly, reflected signals from any object within the transceiver range, such as loading dock 46, are picked up by antenna 22 and supplied to the mixer diode 30 where the frequency shift is measured electronically. Amplifier 24 is designed to amplify and shape the resultant doppler shift signal and to activate the alarm 26. Note that when the vehicle is backing up, both stationary and moving objects within the transceiver range will be detected since there will be relative movement between the transceiver and these objects. Even when the vehicle is stationary, a moving object, such as a running child, will be detected by the transceiver and result in activation of the alarm. A stationary object will not be detected when the vehicle is stationary since there is no relative movement to cause a doppler shift signal to be generated. Thus the alarm will stop once the moving object leaves the transceiver range. Likewise, when the buzzer is activated by a stationary object, it will stop once the vehicle is stopped.

Advantages of the driver alerting device in the above embodiment of the invention are that it is suitable for placement within the passenger compartment of a vehicle; it may easily be connected both electrically and mechanically to a vehicle, and it is economical, simple and rugged in construction and efficient in operation.

## Claims

1. A driver alerting device for a vehicle having a back-up light circuit reverse switch (34), characterised by the device comprising, a transceiver (20) comprising a micro-wave radar device using the doppler shift principle to detect the presence of a target within the transceiver range, the transceiver being mountable at the rearward end of a vehicle (14) for directing the wave output thereof rearwardly of the vehicle, means for supplying to the transceiver return wave signals from any target within the transceiver range, an intermediate frequency amplifier (24) operatively connected to the transceiver, the amplifier being operative to amplify and shape the return wave signals, a remote indicator (26) placeable within or adjacent the passenger compartment (16) of the vehicle, means for electrically connecting the remote indicator to the transceiver for activation of the indicator in response to detection by the transceiver of return wave signals from any target within the transceiver range, and means for electrically connecting the transceiver to the back-up light circuit reverse switch (34) of the vehicle for activation of the transceiver in response to activation of the back-up light circuit reverse switch of the vehicle.

2. The driver alerting device of claim 1 wherein the transceiver (20) includes a wave guide cavity and a gunn diode (28) mounted in the wave guide cavity for transmitting wave output therefrom.

3. The driver alerting device of claim 1 or 2 wherein the transceiver further includes a schottky barrier mixer diode (30) which is operative as the receiver thereof.

4. The driver alerting device of any one of claims 1 to 3 wherein the means for supplying return wave signals to the transceiver comprises a high gain antenna.

5. The driver alerting device of any one of claims 1 to 3 wherein the means for supplying return wave signals to the transceiver comprises a low gain antenna.

6. The driver alerting device of claim 1 wherein the means for supplying return wave signals to said transceiver comprises an antenna mounted directly to the transceiver.

7. The driver alerting device of claim 1 wherein the intermediate frequency amplifier (24) is a solid state multi-stage operational amplifier.

8. The driver alerting device of claim 1 wherein the remote indicator (26) comprises a solid state piezo-electric alarm.

9. A driver alerting device for a vehicle having a transmission with a reverse gear, having a transceiver (20) mountable on the rear of the vehicle (14) characterised by the device comprising a micro-wave radar device using the doppler shift principle to detect the presence of a target (46) within the transceiver range, means (22) for supplying to the transceiver return wave signals from any target within the transceiver range, an intermediate frequency amplifier (24) operatively connected to said transceiver, the amplifier being operative to amplify and shape the return wave signals, a remote indicator (26) placeable within or adjacent the passenger compartment (16) of the vehicle, means for electrically connecting the remote indicator to said transceiver for activation of the indicator in response to detection by the transceiver of return wave signals from any target within the transceiver range, and means (34) for activating the transceiver in response to activation of the reverse gear.

10. A vehicle having a driver alerting device as claimed in any one of claims 1 to 9.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 008 750 (FILIPOV) * Page 4, lines 6-18; page 6, line 24 - page 8, line 6; figure * | 1,9,10 | G 01 S 13/93 G 01 S 7/02 |
| Y | | 2-8 | |
| Y | CA-A-1 237 798 (DOMBROWSKI) * Page 4, line 11 - page 6, line 19; figures 2,3 * | 2-8 | |
| A | US-A-4 251 817 (KIMURA et al.) * Column 2, line 60 - column 4, line 51; figures 7-9 * | 2,3,6 | |
| A | US-A-3 750 169 (STRENGLEIN) * Figure 5; column 4, line 68 - column 5, line 6 * | 4 | |
| A | FR-A-2 139 621 (PEUGEOT) * Figure 2; page 3, line 38 - page 4, line 1 * | 5 | |
| A | GaAs IC SYMPOSIUM TECHNICAL DIGEST 1985, Monterey, 12th - 14th November 1985, pages 121-124, IEEE, New York, US; P.R. MALONEY et al.: "L-band GaAs transceiver components" * Pages 122-123 * | 6,7 | TECHNICAL FIELDS SEARCHED (Int. Cl.4) G 01 S |
| A | US-A-3 970 879 (KUMON) * Column 1, lines 5-8; figures * | 8 | |
| A | US-A-3 786 507 (C.F. HURD, Jr.) | | |
| A | US-A-4 404 541 (KODERA et al.) | | |

The present search report has been drawn up for all claims

| Place of search | Date of completion of the search | Examiner |
|---|---|---|
| THE HAGUE | 07-03-1989 | DEVINE J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document